# EUROPEAN PATENT SPECIFICATION

(11) **EP 0 428 221 B1**
(45) Date of publication and mention of the grant of the patent: **11.10.2000**
(21) Application number: 90202981.8
(22) Date of filing: 12.11.1990
(51) Int. Cl.: C08K 5/00, C08L 75/04

(54) **Viscosity reduction of high viscosity fluid flame retardants for polyurethanes**
Viskositätsreduzierung von hochviskosen flüssigen Flammschutzmitteln für Polyurethane
Réduction de la viscosité des retardateurs de flamme liquides à viscosité élevée pour polyuréthanes

(30) Priority: 14.11.1989 US 436989
(43) Date of publication of application: 22.05.1991
(73) Proprietor: Akzo Nobel N.V., 6824 BM Arnhem (NL)
(72) Inventor: Fesman, Gerald, Teaneck, New Jersey 07666 (US); Aaronson, Alan Michael, Flushing Meadows, New York 11365 (US)
(74) Representative: Schalkwijk, Pieter Cornelis

(56) References cited:
- WO-A-89/03403
- DE-A- 3 005 477
- FR-A- 2 304 642
- US-A- 4 746 682

## Description

### Background of the invention

Polyurethane foams, coatings and elastomers are commonly admixed with flame retardants to achieve the desired degree of flame retardancy for the final material desired. Pumpable fluid (or liquid) flame retardant compositions are a preferred class since such pumpable formulations are needed in environments where automation and machine mixing of the various components are used. Examples of the chemical classes for such fluid or liquid flame retardants include brominated aryl flame retardants, such as polybromodiphenyl oxide, and various viscous organophosphorus flame retardants such as the oligomeric phosphate esters, such as the chlorinated oligomeric phosphate esters (e.g. FYROL 99 brand) and the reaction product of 2-chloro-1-propanol phosphate (3:1) with ethylene oxide and phosphorus pentoxide (FYROL PCF brand).

High viscosity in such fluid or liquid flame retardant compositions can be disadvantageous since it makes the pumping and movement of such compositions more difficult thereby complicating manufacturing operations. For example, it is known that polybrominated diphenyl oxide flame retardants are very viscous. U.S. Patent No. 4,746,682 to J. Green indicates that either alkyl diphenyl phosphates or alkylated triaryl phosphates can be used to achieve blends having acceptably low viscosity as compared to the polybrominated aryl flame retardant itself.

It is known from JP 57/207,641 to blend together, by kneading, a polyether, a polystyrene, triphenyl phosphate, and a polyphosphate, in order to produce a fire proof resin. The disclosure does not address the above problem of producing a pumpable flame retardant formulation, nor does it provide such a formulation.

### Description of the invention

It has now been found that triphenyl phosphate, a solid at room temperature, is an effective viscosity reducing agent in the aforementioned types of liquid, but viscous, flame retardant compositions. In this respect the invention pertains to the use of triphenyl phosphate for reducing the viscosity of a fluid flame retardant composition, according to apended claim 1, suitable for use in forming a flame retardant polyurethane composition which comprises a normally viscous flame retardant.

The level of use of triphenyl phosphate with a particular flame retardant will depend upon its initial compatibility or miscibility with the flame retardant component whose viscosity is initially high and in need of reduction. The level of triphenyl phosphate to use is dependent upon the ultimate viscosity that is desired for the composition containing it. The level of triphenyl phosphate needed to achieve such a viscosity result is, in turn, dependent upon the miscibility characteristics between the flame retardant chosen and the triphenyl phosphate. Generally, the amount of triphenyl phosphate that needs to be added will range from about 5% to about 25%, by weight of the fluid or liquid flame retardant whose viscosity is to be reduced. The liquid flame retardants to which the instant invention can be added include those containing a major amount of a polybrominated diphenyl oxide and a minor amount of an aromatic bisphosphate (e.g., resorcinol bis(diphenyl phosphate) or the bis(diphenyl phosphate ester) of neopentyl glycol) as shown in Examples 1-6 below. Generally speaking, it has been found that up to about 25%, by weight of triphenyl phosphate, based on the weight of the entire composition, can be used in such systems.

The triphenyl phosphate viscosity reducing additive of the instant invention can also be used in similar amount with flame retardant compositions which contain oligomeric phosphate esters as the sole or predominant component. This is shown in Examples 10-12, below.

The instant invention allows for the obtaining of low enough viscosities to achieve pumpable flame retardant compositions, which are required to satisfactorily process flexible and rigid polyurethane foams, for example. Easier machine mixing and miscibility are achieved by bringing the viscosities of the components closer and preferably lower. Coatings and elastomers also require low viscosities for better flowability and processing.

### Examples 1-3

The following illustrate the viscosity characteristics (mPa.s (cps) at 25°C) of various blends containing pentabromodiphenyl oxide (PBDPO) and resorcinol bis(diphenyl phosphate) flame retardant with (Examples 2-3) and without (Example 1) triphenyl phosphate (TPP). The TPP-containing blend was heated slightly above the melting point of the TPP to achieve its dissolution:

| | Components | Wt.% | Viscosity |
|---|---|---|---|
| 1. | PBDPO | 70 | 9000 |
| | Bisphosphate | 30 | |
| 2. | PBDPO | 70 | 2500 |
| | Bisphosphate | 20 | |
| | TPP | 10 | |
| 3. | PBDPO | 70 | 900 |
| | Bisphosphate | 10 | |
| | TPP | 20 | |

### EXAMPLES 4-6

These Examples are analogous to those in Examples 1-3 with the bisphosphate being the bis(diphenyl phosphate ester) of neopentyl glycol as more particularly described in EP-A-0406934:

| | Components | Wt % | Viscosity |
|---|---|---|---|
| 4. | PBDPO | 70 | 4000 |
| | Bisphosphate | 30 | |
| 5. | PBDPO | 70 | 2040 |
| | Bisphosphate | 20 | |
| | TPP | 10 | |
| 6. | PBDPO | 70 | 800 |
| | Bisphosphate | 10 | |
| | TPP | 20 | |

### EXAMPLES 7-9

These Examples are analogous to the foregoing with the flame retardant being (isopropylated phenyl diphenyl phosphate PHOSFLEX 41P brand from Akzo Chemicals Inc.):

| | Components | Wt % | Viscosity |
|---|---|---|---|
| 7. | PBDPO | 70 | 2500 |
| | PHOSFLEX 41P brand | 30 | |
| 8. | PBDPO | 70 | 950 |
| | PHOSFLEX 41P brand | 20 | |
| | TPP | 10 | |
| 9. | PBDPO | 70 | 625 |
| | PHOSFLEX 41P brand | 10 | |
| | TPP | 20 | |

### EXAMPLES 10-12

In these Examples the pentabromodiphenyl oxide of Examples 1-9 is replaced by the reaction product (3:1) of 2-propanol-1- chlorophosphate with ethylene oxide and phosphoric oxide [CAS Registry No. 72102-42-2), referred to below as "RP":

| | Components | Wt % | Viscosity |
|---|---|---|---|
| 10. | RP | 100 | 7700 |
| 11. | RP | 90 | 4900 |
| | PHOSFLEX 41P brand | 10 | |
| 12. | RP | 90 | 3000 |
| | TPP | 10 | |

### Examples 13-15

Tris(dichloropropyl) phosphate (Fyrol FR-2 brand from Akzo Chemicals Inc.), a successful commercial flame retardant, is even more desirable if its viscosity of 2000 mPa.s (cps) at 25°C could be reduced to around 1000 mPa.s (cps) with a minimum use level of a compatible additive which would not severely reduce its flame retardancy effectiveness. The following illustrates the desired effect, in accordance with the present invention in Example 15:

| | Components | Wt.% | Viscosity |
|---|---|---|---|
| 13. | Fyrol FR-2 brand | 100 | 2000 |
| 14. | Fyrol FR-2 brand | 95 | 1200 |
| | PHOSFLEX 41P brand | 5 | |
| 15. | Fyrol FR-2 brand | 95 | 950 |
| | TPP | 5 | |

## Claims

1. A fluid flame retardant composition suitable for use in forming flame retarded polyurethane composition which comprises a normally viscous flame retardant, with a viscosity of 2000 mPa.s or greater at 25°C, and from 5 to 25 percent by weight, based on the weight of the normally viscous flame retardant, of triphenyl phosphate, provided that the composition does not contain a polyphenylene ether resin.

2. A composition as claimed in Claim 1 wherein the flame retardant is polybrominated diphenyl oxide or a mixture containing a major amount of a polybrominated diphenyl oxide and a minor amount of an aromatic bisphosphate.

3. A composition as claimed in Claim 2 wherein the flame retardant is pentabromodiphenyl oxide.

4. A composition as claimed in Claim 1 wherein the flame retardant is an oligomeric phosphate ester or a mixture containing a major amount of an oligomeric phosphate ester.

5. Use of a composition as claimed in any one of the preceding Claims in the process to make flame retardant polyurethane compositions.

## Patentansprüche

1. Fliessfähiges Flammhemmittel, geeignet zur Verwendung für die Bildung von flammhemmenden Polyurethanzusammensetzungen, enthaltend ein unter Normalbedingungen viskoses Flammhemmittel das bei 25°C eine Viskosität von 2000mPa.s oder grösser besitzt, und 5 bis 25 Gew.-%, bezogen auf das Gewicht des unter Normalbedingungen viskosen Flammhemmittels, Triphenylphosphat, unter der bedingung dass die Zusammensetzung kein Polyphenylenetherharz enthält.

2. Zusammensetzung nach Anspruch 1, bei welcher das Flammhemmittel polybromiertes Diphenyloxid ißt oder eine Mischung enthaltend einen grösseren Anteil eines polybromierten Diphenyloxides und einen geringeren Anteil eines aromatischen Bisphosphates.

3. Zusammensetzung nach Anspruch 2, bei welcher das Flammhemmittel Pentabromdiphenyloxid ist.

4. Zusammensetzung nach Anspruch 1, bei welcher das Flammhemmittel ein oligomerer Phosphatester ißt oder eine Mischung, die überwiegend einen grösseren Anteil eines oligomeren Phosphatesters enthält.

5. Verwendung einer Zusammensetzung gemäss einem der vorangehenden Ansprüche, in dem Verfahren, um flammhemmende Polyurethanzusammensetzungen zu machen.

## Revendications

1. Une composition ignifugeante fluide pouvant être utilisée pour la formation de composition de polyuréthanne ignifugée, qui comprend un agent ignifugeant normalement visqueux, ayant une viscosité de 2000 mPa.s ou supérieure à 25 °C, et de 5 à 25 % en poids, exprimé par rapport au poids de l'ignifugeant normalement visqueux, de triphényl phosphate à condition que la composition ne renferme pas de résine de polyphénylène éther.

2. Une composition selon la revendication 1, dans laquelle l'ignifugeant est un polybromo diphényl oxyde ou un mélange contenant une quantité principale de polybromo diphényl oxyde et une quantité secondaire d'un bisphophate aromatique.

3. Une composition selon la revendication 2, dans laquelle l'ignifugeant est le pentabromo diphényl oxyde.

4. Une composition selon la revendication 1, dans laquelle l'ignifugeant est un ester phosphorique oligomère ou un mélange contenant une quantité principale de phosphate oligomère.

5. L'utilisation d'une composition selon l'une quelconque des revendications précédentes dans un procédé de fabrication de compositions de polyuréthanne ignifugées.
